# EUROPEAN PATENT APPLICATION

(11) **EP 4 260 674 A1**
(43) Date of publication of application: **18.10.2023**
(21) Application number: 22168071.3
(22) Date of filing: 13.04.2022
(51) Int. Cl.: A01D 34/00, A01D 41/127, A01D 41/14, A01D 75/18

(54) **HEIGHT SENSOR ARRANGEMENT FOR A COMBINE HEADER**

(71) Applicant: CNH Industrial Polska Sp. z o.o., 09-407 Plock (PL)
(72) Inventor: Adamczyk, Dariusz, 09-408 Plock (PL)
(74) Representative: CNH Industrial IP Department

(57) **Abstract**

A sensor assembly for an agricultural header according to the invention comprises a pivot pin (13) and one or more skids (10) attached thereto and configured to translate changes in the ground level into a rotation of the pivot pin, and a sensor (16) for measuring the rotation of the pin. At least one skid is attached to the pivot pin (13) through a flexible connection comprising a support bracket (19) and an elastic element (35) mounted between the pivot pin (13) and the end of the skid (10). The skid is pivotably connected to the support bracket (19) so as to be able to deflect laterally, and the elastic element (35) is configured to bend when lateral forces acting in the skid exceed a given threshold. The elastic element (35) returns to a linear shape when the lateral forces drop below the threshold, thereby returning the skid (10) to its non-deflected state. Bending of the elastic element (35) in a direction perpendicular to the pivot pin is obstructed so that the elastic element does not interfere with the angular displacement of the skid (10) caused by variations in the ground level.

## Description

### Field of the Invention

The present invention is related to agricultural combine harvesters, in particular to combine headers equipped with a series of header height control sensors.

### State of the art

A header height control (HHC) system is configured to automatically adjust the height of the header as the combine is driven through a field, so that the height of the cutting knives at the front of the header follows closely any irregularities of the ground surface.

The HHC system includes a plurality of sensor assemblies arranged on the underside of the header, which include pivotable skids or plates which are dragged along the ground surface, and sensors configured to measure the rotation of the skids or plates about an axis oriented in the longitudinal direction of the header, i.e. transversal to the forward direction of the harvester. The detected rotation is representative of changes in the ground level, and used as input for a controller configured to adjust the height of the header by acting on a set of actuators configured for that purpose.

Especially when the combine is making a turn in the field, a considerable lateral force can be exerted on the pivotable elements of the sensor arrangement, which may lead to incorrect measurements or damage to the sensor assemblies.

### Summary of the invention

The invention is related to a sensor assembly for a combine header that solves the above-described problem, and to a header comprising a sensor arrangement including one or more of such sensor assemblies, as described in the appended claims. A sensor assembly according to the invention comprises a number of elements known from existing HHC systems, namely a pivot pin and one or more skids attached thereto and configured to translate changes in the ground level into a rotation of the pivot pin, and a sensor for measuring the rotation of the pin. In an assembly according to the invention, at least one skid is attached to the pivot pin through a flexible connection comprising a support bracket and an elastic element mounted between the pivot pin and the end of the skid. The skid is pivotably connected to the support bracket so as to be able to deflect laterally, and the elastic element is configured to bend when lateral forces acting on the skid exceed a given threshold. The elastic element returns to a linear shape when the lateral forces drop below the threshold, thereby returning the skid to its non-deflected position. Bending of the elastic element in a plane perpendicular to the pivot pin is obstructed so that the elastic element does not interfere with the angular displacement of the skid caused by variations in the ground level. The bracket comprises lateral boundaries for limiting the sideways deflection of the skid. The elastic element may be a coil spring with closely packed coils, with the ends of the spring respectively enveloping a tap fixed to the pivot pin and an end portion of the skid.

The sensor assembly enables a sideways deflection of the skids, for example when the harvester takes a turn in the field, thereby reducing the risk of damage to the sensor assemblies under the influence of lateral forces.

### Brief description of the figures

Figure 1 shows a combine header equipped with a plurality of sensor assemblies in accordance with an embodiment of the invention.
Figure 2 is a detail of one sensor assembly mounted on the underside of the header.
Figure 3 shows the sensor assembly as such.
Figures 4a and 4b are section views of one skid of the assembly, as seen in a vertical section plane .
Figures 5a and 5b are section views of the assembly, as seen in a section plane through the central axes of a skid and of the pivot pin.

### Detailed description of preferred embodiments of the invention

Preferred embodiments will now be described with reference to the drawings. The detailed description is not limiting the scope of the invention, which is defined only by the appended claims.

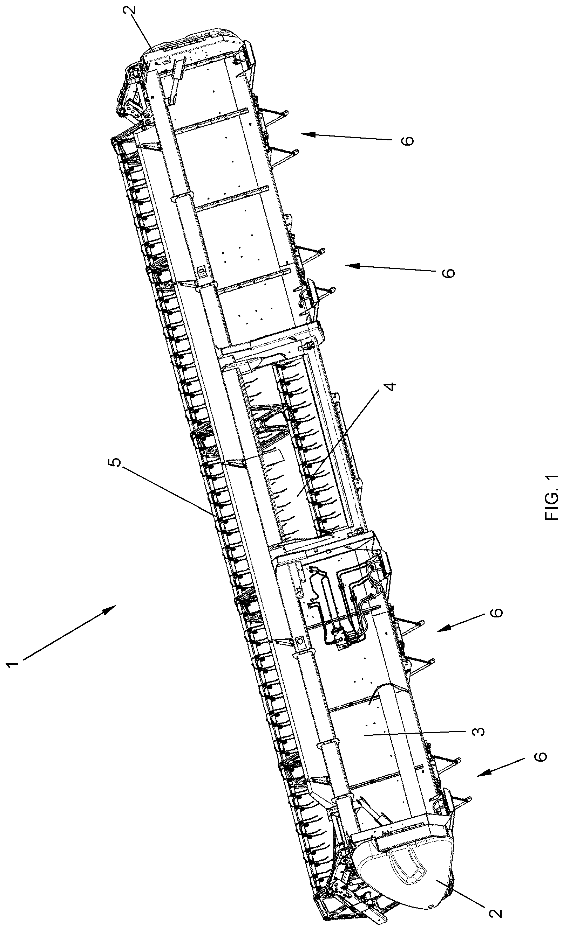

Figure 1 shows a combine header 1 in accordance with the invention, i.e. equipped with a sensor arrangement according to a preferred embodiment of the invention. Generally known components of the header 1 are indicated in the drawing, including the header's side panels 2 and back wall 3, provided with a central opening 4. Also visible is a rotatable reel 5. When the header is mounted at the front of a combine harvester, cut crops are transported by a set of augers or draper belts (not visible in Figure 1) towards the central opening 4 in the header's back wall 3, at which point the crops enter the feeder housing of the harvester from where they are further processed in a manner known as such.

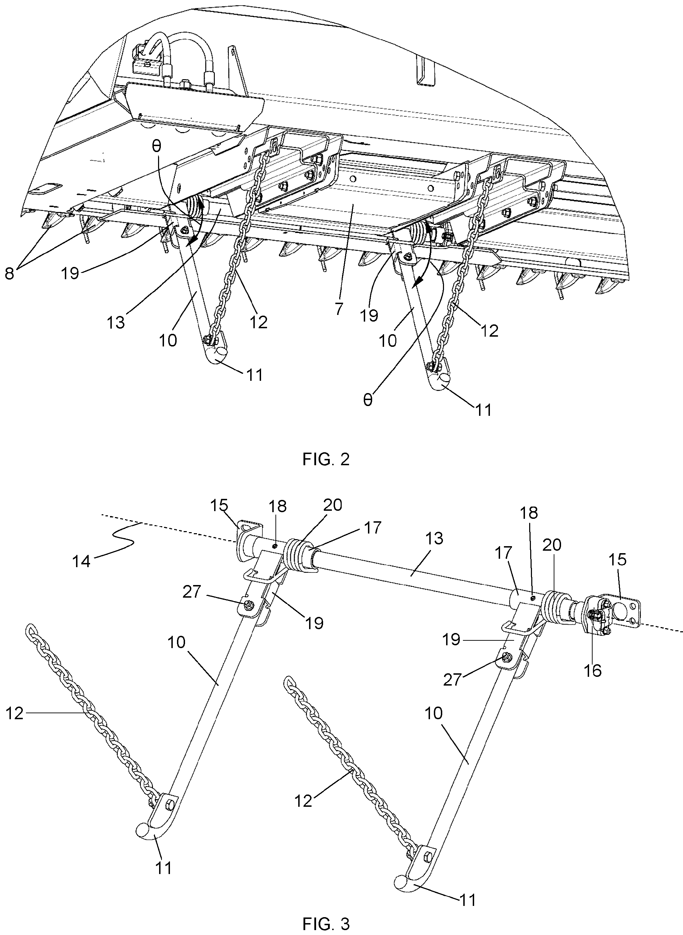

The sensor arrangement comprises four sensor assemblies 6, two on each side of the central opening 4 in the back wall 3. A detailed view of one of the assemblies is shown in Figures 2 and 3. The image in Figure 2 shows the underside of the header floor 7 and an array of counterknives 8 at the front of the header. As well known in the art, the counterknives are configured to cooperate with a reciprocating knife bar (not shown) for cutting crops as the combine advances through a field. In some header types, the knife bar and the counterknives are part of a movable cutterbar which can be moved forward or backward relative to the header's back wall.

The sensor assembly 6 comprises a pair of preferably metal skids 10 having the shape of straight rods with a curved end portion 11 configured to maintain contact with the ground as the skids are dragged along the surface in the direction of travel of the combine. The skids are oriented at an acute but variable deflection angle θ relative to the header floor, said deflection angle being variable as a function of changes in the ground level. In the embodiment shown, the skids 10 are furthermore connected to the header floor by respective chains 12, which determine a maximum deflection angle of the skids. The image in Figure 2 shows said maximum deflection angle which may be reached for example when the header is lifted high above the average ground level. In operation, when the skids 10 contact the ground, the deflection angle is smaller than this maximum and the chains 12 are slackened. The chains 12 could however be omitted or another blocking mechanism could be provided for limiting the deflection of the skids 10.

Both skids 10 are connected to a pivot pin 13 oriented transversely to the skids 10, i.e. in the longitudinal direction of the header 1. The pivot pin 13 is rotatable about its central longitudinal axis 14 relative to a pair of mounting brackets 15, best visible in Figure 3, attached by screw connections to the underside of the header. At one end of the pivot pin 13, said pin is coupled to a sensor 16 mounted between the pin 13 and the mounting bracket 15. This may be a potentiometer configured to produce a signal that is representative of a rotation of the pin 13 about it central pivot axis 14. Such a sensor is known as such and the sensor assembly according to the invention may be equipped with any known type of sensor that is suitable for measuring changes in the angular position of the pivot pin 13.

The pivot pin 13 may be attached to the underside of the header floor 7 or to the underside of a fixed or movable cutterbar. The invention is applicable to multiple header types, including headers with as well as headers without a movable cutterbar.

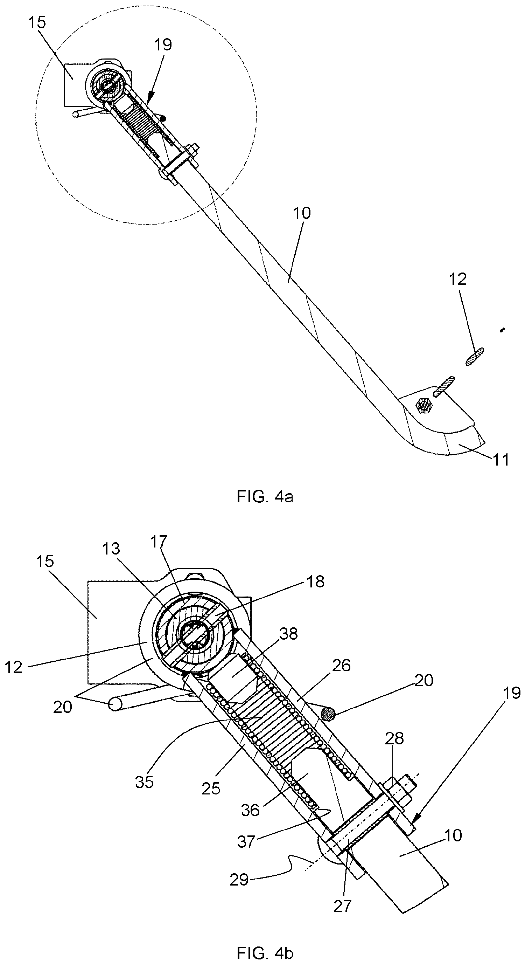

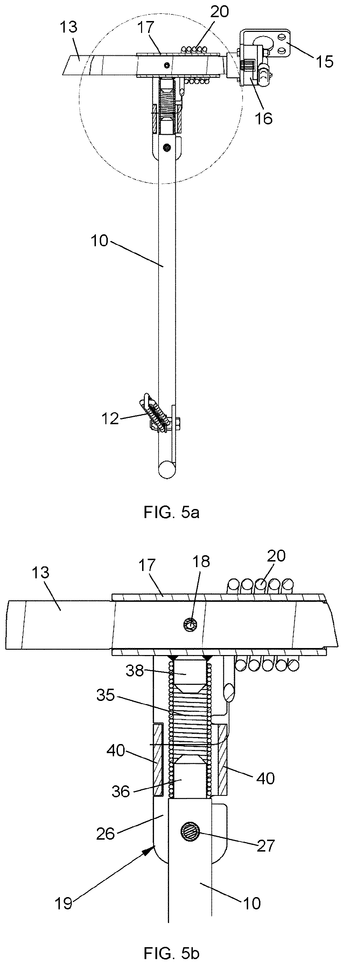

According to the invention, the skids 10 are connected to the pivot pin 13 by a connection that translates any changes in the deflection angle θ of the skids 10 to a rotation of the pin 13, while allowing a limited lateral deflection of the skids 10, as a consequence of lateral forces acting on the skids, for example when the combine is making a turn in the field. Details of this connection will be described on the basis of detail drawings presented in Figures 4 and 5, but a number of features are already seen in Figures 2 and 3. The pivot pin 13 is inserted in a pair of tube elements 17 and rotationally coupled to said tube elements by securing taps 18, i.e. the pivot pin 13 and the tube elements 17 rotate as a single body about the axis 14. On each tube element 17, a support bracket 19 is welded, with the end of the skids 10 inserted in the respective brackets 19. Alternatively, the tube elements 17 could be omitted and the brackets 19 could be welded directly to the pin 13. A pair of rotational springs 20 is mounted on the respective tube elements 17, each spring exerting a bias force on the skids 10 in the direction of the ground. These springs 20 ensure that variations in the ground level are closely followed by the skids 10.

The manner in which the skids 10 are coupled to the brackets 19 is now described in more detail. Figure 4a show a vertical cross section of one of the skids 10. The skid 10 with its curved end portion 11 is indicated, as well as the chain 12 and one of the mounting brackets 15 lying behind the section plane. Figure 4b is an enlarged view of the encircled area in Figure 4a. This image shows the pivot pin 13, the tube element 17 with the securing tap 18 rotationally coupling the pin 13 to said tube element 17, and one of the rotational springs 20. It is seen that the support bracket 19 comprises a lower and an upper plate 25,26 arranged parallel to each other and welded at one end to the tube element 17. At the other end, the plates are perforated by a bolt 27 oriented perpendicularly to the plates 25,26. The bolt 27 also perforates the portion of the skid 10 that is inserted between the plates 25,26. The bolt 27 is secured by a nut 28, thereby forming a pivot axle that enables a pivoting movement of the skid 10 about the central axis 29 of the bolt 27.

A coil spring 35 is furthermore mounted between the end of the skid 10 and the tube element 17, and oriented in line with the skid 10 when the latter is in its standard position shown in the drawings. This is the position of the skid when no lateral forces are acting on it. The spring 35 has end planes which are essentially perpendicular to the longitudinal direction of the spring. In the embodiment shown, the coils of the spring 35 are closely packed together when no external force is applied to the spring.

The skid 10 is provided with a narrow end portion 36 that closely fits inside the spring 35. On the other side, the spring 35 envelops, also in a close-fitting way, a tap 38 that is welded to the side of the tube element 17. The upper and lower plates 25 and 26 of the bracket 19 are in sufficiently close proximity to the spring 35 so as to essentially obstruct any bending of the spring 35 in a direction perpendicular to the plates 25 and 26, i.e. in a plane perpendicular to the pivot pin 13. As a consequence, the spring 35 has essentially no influence on the transmission of a change in the skid's deflection angle θ to a rotation of the tube element 17 and hence of the pivot pin 13. A limited degree of lateral bending of the spring is however possible, as best seen in the images shown in Figures 5a and 5b, showing a partial section by a section plane defined by the central axes of the pin 13 and the skid 10. The various components are again indicated by the same reference numerals, including the lower plate 26 of the bracket 19 lying underneath the section plane. It is seen that the bracket 19 comprises two sidewalls 40 spaced apart from the coil spring 35. This spacing allows a degree of bending of the spring 35 in the plane of the section, i.e. laterally with respect to the normal orientation of the skid 10. This enables the skid 10 to pivot about the pivot axis 29 over a given angular range, limited by the sidewalls 40, when a lateral force is acting on the skid.

The spring 35 has a significant bending stiffness, so that bending of the spring (and pivoting of the skid 10) only occurs above a given lateral force level, i.e. when lateral forces acting on the skid result in a moment about axis 29 higher than a given threshold. Due to the elastic properties of the spring 35, such lateral bending takes place elastically, so that when the moment falls below the threshold, the spring 35 returns to its linear shape by a damped oscillation, the damping being determined by friction forces and environmental conditions. The bending stiffness of the spring and the mass of the skid are configured so that the return to the linear position takes place in a short timespan, short enough not to cause a significant disruption of the sensing function of the skids.

This configuration thereby allows a degree of flexibility to the skids 10 which are able to deflect laterally, for example when a large sideways force acts on the skids during turning of the harvester. When the force is taken away, the skids are able to return quickly to their non-deflected position. This flexibility is beneficial in avoiding potential damage to the skids in such circumstances.

In the embodiment as described above, the end planes of the spring 35 are not fixed to the tube element 17 at one side nor to the end portion 36 of the skid 10 on the other side. This means that when the spring bends, the ends of the spring are able to shift slightly with respect to the tap 38 and the narrow portion 36 of the skid, thereby enabling bending of the spring without excessive pressure on the coils. One or both end planes of the spring could however be fixed, for example welded to the tube portion 17 or to the skid 10, provided that the spring is still capable of undergoing sufficient bending. For example, the coils of the spring could be less densely packed, taking care however that the bending stiffness of the spring remains at a desired level.

The tube elements 17 could be omitted, in which case the brackets 19 may be welded directly to the pivot pin 13. The arrangement including the tube element 17 however has the advantage that the bracket 19 can be more easily removed from the pin 13 in case of damage or maintenance.

The invention is not limited to a sensor assembly comprising one pin 13 and two skids 10. Any realistic number of skids, for example 1 or 3, connected to the same pivot pin 13 can be realized in accordance with the invention.

Instead of a coil spring, any elastic element having comparable elastic bending properties can be applied in a sensor assembly of the invention, for example a leaf spring having sufficient stiffness, and arranged vertically between the upper and lower plates 25 and 26 of the bracket 19. The ends of the leaf spring could be welded to the tube element 17 (or directly to the pivot pin 13 when no tube element 17 is used) at one side and to the skid 10 on the other side, or maintained in a similar manner as the coil spring 35 shown in the drawings. The spacing between the sidewalls 40 and the vertically arranged leaf spring would again determine the maximum lateral deflection of the skids 10.

## Claims

1. A sensor assembly for an agricultural header (1), comprising a pivot pin (13) configured to be rotatably mounted on the underside of the header, and one or more skids (10) attached to said pin (13) and oriented at a variable acute angle (θ) relative to the header's underside when the sensor assembly is installed thereon, wherein the skids (10) are connected to the pivot pin (13) in such a way that the variation of said acute angle caused by a variation in the ground level is translated into a rotation of the pivot pin, the assembly further comprising a sensor (16) configured to measure said rotation, **characterized in that** the end of at least one of the skids (10) is attached to the pivot pin (13) through a flexible connection, the connection comprising :
- a support bracket (19) fixed to the pivot pin (13), wherein the skid (10) is pivotably connected to the support bracket (19), in such a way that the skid is pivotable about a pivot axis (29) that is essentially perpendicular to the pivot pin (13),
- an elastic element (35) mounted between the pivot pin (13) and the end of the skid (10), the elastic element (35) having a linear shape in line with the skid when no lateral forces are acting on the skid, said elastic element (35) being configured to :
∘ maintain said linear shape when no lateral forces are acting on the skid (10), or when the moment resulting from such lateral forces about said pivot axis (29) remains below a given threshold,
∘ bend elastically so as to enable said pivoting of the skid (10) about said pivot axis (29), when said moment is equal to or higher than said threshold,
∘ return to the linear shape when said moment drops below said threshold,
and wherein :
- bending of the elastic element (35) in a plane perpendicular to the pivot pin (13) is obstructed,
- the bracket (19) comprises lateral boundaries (40) configured to limit the bending of the elastic element (35), thereby limiting the pivoting range of the skid (10) about said pivot axis (29).

2. The sensor assembly according to claim 1, wherein the support bracket (19) comprises a lower plate (25) and an upper plate (26), wherein said end of the skid (10) is inserted between the upper and lower plates (25,26), and wherein the plates (25,26) and the end of the skid (10) are perforated by a pivot axle (28) whose central axis coincides with said pivot axis (29).

3. The sensor assembly according to claim 2, wherein said lateral boundaries are formed by a pair of sidewalls (40) of the bracket (19).

4. The sensor assembly according to 2 or 3, wherein bending of the elastic element (35) in a plane perpendicular to the pivot pin (13) is obstructed by the fact that the elastic element (35) is mounted between the lower and upper plates (25,26) and in close proximity to said lower and upper plates (25,26).

5. The sensor assembly according to any one of the preceding claims, wherein the elastic element is a coil spring (35).

6. The sensor assembly according to claim 5, wherein the skid (10) comprises an end portion (36) that is inserted in one end of the spring (35) and wherein a tap (38) that is immovably attached to the pivot pin (13) is inserted in the other end of the spring (35).

7. The sensor assembly according to claim 5 or 6, wherein the coils of the spring (35) are closely packed together.

8. The sensor assembly according to any one of the preceding claims, comprising a plurality of skids (10).

9. The sensor assembly according to claim 8, comprising two skids (10), attached at the outer ends of the pivot pin (13).

10. The sensor assembly according to any one of the preceding claims, wherein the bracket (19) is fixed to a tube element (17) that is placed around the pivot pin (13) with the pivot pin being fixed to the tube element (17).

11. A sensor arrangement for an agricultural header (1), comprising multiple sensor assemblies in accordance with any one of the preceding claims.

12. An agricultural header (1) comprising a sensor arrangement in accordance with claim 11.
